# EUROPÄISCHE PATENTSCHRIFT

(11) **EP 3 983 252 B1**
(45) Veröffentlichungstag und Bekanntmachung des Hinweises auf die Patenterteilung: **10.09.2025**
(21) Anmeldenummer: 20742219.7
(22) Anmeldetag: 14.07.2020
(51) Int. Cl.: B60K 35/10, B60K 35/22, B60K 35/23, B60K 35/28, B60K 35/29, B60K 35/60, B60K 35/80

(54) **GENERIEREN EINER ANZEIGE EINES AUGMENTED-REALITY-HEAD-UP-DISPLAYS FÜR EIN KRAFTFAHRZEUG**
GENERATION OF A DISPLAY FOR AN AUGMENTED REALITY HEAD-UP DISPLAY OF A MOTOR VEHICLE
GÉNÉRATION D'UN AFFICHAGE POUR UN AFFICHAGE TÊTE HAUTE À RÉALITÉ AUGMENTÉE D'UN VÉHICULE À MOTEUR

(30) Priorität: 22.08.2019 DE 102019212601
(43) Veröffentlichungstag der Anmeldung: 20.04.2022
(73) Patentinhaber: VOLKSWAGEN AKTIENGESELLSCHAFT, 38440 Wolfsburg (DE)
(72) Erfinder: SADOVITCH, Vitalij, 38102 Braunschweig (DE); WUTTKE, Ulrich, 38126 Braunschweig (DE); JELLENTRUP, Nina, 38106 Braunschweig (DE)
(86) Internationale Anmeldenummer: PCT/EP2020/069921
(87) Internationale Veröffentlichungsnummer: WO 2021/032368

(56) Entgegenhaltungen:
- WO-A1-2016/000814
- DE-A1- 102011 084 217
- DE-A1- 102017 221 488

## Beschreibung

Die vorliegende Erfindung betrifft ein Verfahren, ein Computerprogramm mit Instruktionen und eine Vorrichtung zum Generieren einer Anzeige eines Augmented-Reality-Head-up-Displays für ein Kraftfahrzeug. Die Erfindung betrifft weiterhin ein Kraftfahrzeug, in dem ein erfindungsgemäßes Verfahren oder eine erfindungsgemäße Vorrichtung eingesetzt wird.

Mit der stetigen Weiterentwicklung von Virtual und Augmented Reality-Technologien und -Anwendungen finden diese auch Einzug in das Automobil. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt. Synonym wird auch der Ausdruck "Mixed Reality" verwendet.

Eine mögliche technische Realisierung, um den Fahrerarbeitsplatz entsprechend mit perspektivisch korrekten virtuellen Erweiterungen anzureichern, bietet das Head-up-Display (HUD). Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeugs wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss.

In diesem Zusammenhang beschreibt DE 10 2016 203 080 A1 ein Verfahren zum Betreiben eines Head-up-Displays für ein Kraftfahrzeug, bei dem in Abhängigkeit von aktuellen Fahrdaten mittels des Head-up-Displays Hinweise in das Sichtfeld des Fahrers projiziert werden. Mittels eines satellitengestützten Navigationssystems wird eine aktuelle Position und Fahrtrichtung oder Fahrstrecke des Kraftfahrzeugs erfasst. Zudem wird ein Manöverpunkt im Bewegungsweg des Kraftfahrzeugs ermittelt. In Abhängigkeit von der Entfernung des Kraftfahrzeugs zu dem Manöverpunkt werden Manöverpfeile projiziert, die als virtuelle Leitplanke angezeigt werden.

Augmented Reality bietet vielfältige Anwendungsmöglichkeiten zur Unterstützung des Fahrers durch kontaktanaloge Markierung von Fahrbahnen und Objekten. Relativ naheliegende Beispiele beziehen sich meist auf den Bereich der Navigation. Während klassische Navigationsanzeigen in herkömmlichen Head-up-Displays in der Regel schematische Darstellungen anzeigen, z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, können dem Fahrer z.B. sehr effektiv Navigationshinweise oder Gefahrenwarnungen direkt am realen Bezugsort präsentiert werden.

In diesem Zusammenhang beschreibt EP 2 899 506 B1 ein Verfahren zum Betreiben eines Head-up-Displays für ein Fahrzeug. Bei dem Verfahren wird eine Distanz zwischen dem Fahrzeug und einem Ort zum Darstellen einer Navigationsinformation in einem Umfeld des Fahrzeugs ermittelt. Unter Verwendung der Navigationsinformation und der Distanz wird eine Bildinformation für das Head-up-Display erzeugt. Dabei wird die Navigationsinformation in der Bildinformation kontaktanalog repräsentiert, wenn die Distanz kleiner als eine erste Distanzschwelle wird, und winkelanalog repräsentiert, wenn die Distanz kleiner als eine zweite Distanzschwelle wird. Die resultierende Bildinformation wird schließlich für das Head-up-Display bereitgestellt.

DE 10 2017 221 488 A1 beschreibt ein Verfahren zur Anzeige eines Trajektorien-Verlaufs vor einem Fahrzeug oder Objekt. Der Trajektorien-Verlauf wird auf einer Anzeigeeinheit, insbesondere ein Head-Up Display oder eine Datenbrille, eingeblendet. Dabei wird der Trajektorien-Verlauf in Rasterform dargestellt. Das Verfahren kennzeichnet sich dadurch aus, dass die Punkte des Rasters mit Symbolen dargestellt werden, von denen je nach Umweltgegebenheit nur die Umrandung oder die vollständig ausgefüllten Symbole dargestellt werden. Zusätzlich kann auch die Größe oder Farbe der Symbole angepasst werden.

WO 2016/000814 A1 beschreibt ein Verfahren zum Betreiben eines Kraftfahrzeug. Falls das Kraftfahrzeug in einem ersten Fahrmodus betrieben wird, wird eine Assistenzgrafik eines aktiven Fahrerassistenzsystems in einem ersten Anzeigemodus auf einer Anzeigeeinrichtung des Kraftfahrzeugs angezeigt. Falls das Kraftfahrzeug in einem zweiten Fahrmodus betrieben wird, wird die Assistenzgrafik des aktiven Fahrerassistenzsystems in einem zweiten Anzeigemodus auf der Anzeigeeinrichtung angezeigt. In den beiden Anzeigemodi wird die Assistenzgrafik dabei in verschiedenen Perspektiven angezeigt.

DE 10 2011 084 217 A1 beschreibt ein Verfahren zur Festlegung eines Kommunikationspartners in einer Fahrzeug-zu-Objekt Kommunikation. Bei dem Verfahren wird eine Blickrichtung eines Fahrers des Kraftfahrzeugs detektiert und ein Schnittpunkt der Blickrichtung mit einer Windschutzscheibe des Kraftfahrzeugs bestimmt. Es wird dann eine Markierung auf die Windschutzscheibe projiziert, wobei die Position der Markierung den Schnittpunkt umfasst. Ein aus der detektierten Blickrichtung des Fahrers mit der Markierung markiertes Objekt außerhalb des Fahrzeugs wird schließlich als Kommunikationspartner ausgewählt.

Eine Registrierung der virtuellen Informationen im realen Sichtfeld des Fahrers stellt sehr hohe Anforderungen an die technische Umsetzung. Um virtuelle Inhalte ortsgenau und perspektivisch korrekt in der Realität darstellen zu können, ist sehr detailliertes Wissen über die Umgebung und die Eigenbewegung des Fahrzeugs notwendig. Damit die virtuelle Einblendung für den Fahrer perspektivisch korrekt in der Welt liegt, muss sie in Abhängigkeit von der Lage des Fahrzeugs im dreidimensionalen Raum positioniert und ausgerichtet sein. Dazu ist es notwendig, das Fahrzeug auf wenige cm genau zu verorten. Selbst mit Differential-GPS Systemen kann jedoch nur eine Genauigkeit von etwa 2 m erzielt werden. Mithilfe einer Sensorfusion, beispielsweise aus GPS und Kameradaten mit z.B. Fahrbahnmarkierungen, kann die Präzision gesteigert werden. Darstellungsfehler aufgrund von Ungenauigkeiten sind jedoch nicht auszuschließen. Beispielsweise kann eine fehlerbehaftete Positionsbestimmung dazu führen, dass Navigationshinweise an einem nicht plausiblen Ort dargestellt werden.

Der Darstellungsbereich eines Head-up-Displays, in dem die Anzeige von virtuellen Inhalten in der Windschutzscheibe möglich ist, wird durch das Sichtfeld oder Field of View (FOV) beschrieben. Das Sichtfeld gibt die Ausdehnung des virtuellen Bildes in horizontaler und vertikaler Richtung in Winkelgrad an und wird im Wesentlichen durch den verfügbaren Bauraum im Fahrzeug limitiert. Bei konventioneller Technologie ist ein Sichtfeld von etwa 10°×4° realisierbar. Eine fehlerbehaftete Positionsbestimmung kann dazu führen, dass anzuzeigende Navigationshinweise außerhalb des Sichtfelds des Augmented-Reality-Head-up-Displays zu liegen kommen und somit gar nicht dargestellt werden können.

Es ist eine Aufgabe der Erfindung, Lösungen für das Generieren einer Anzeige eines Augmented-Reality-Head-up-Displays für ein Kraftfahrzeug bereitzustellen, die eine Reduzierung von Darstellungsfehlern ermöglichen.

Diese Aufgabe wird durch ein Verfahren mit den Merkmalen des Anspruchs 1, durch ein Computerprogramm mit Instruktionen gemäß Anspruch 7 und durch eine Vorrichtung mit den Merkmalen des Anspruchs 8 gelöst. Bevorzugte Ausgestaltungen der Erfindung sind Gegenstand der abhängigen Ansprüche.

Gemäß einem ersten Aspekt der Erfindung umfasst ein Verfahren zum Generieren einer Anzeige eines Augmented-Reality-Head-up-Displays für ein Kraftfahrzeug die Schritte:
- Bestimmen einer Position des Kraftfahrzeugs;
- Bereitstellen einer Vielzahl von virtuellen Elementen für einen Navigationshinweis auf Basis der Position des Kraftfahrzeugs, wobei sich die virtuellen Elemente aus Sicht des Kraftfahrzeugs beidseitig in eine laterale Richtung bis nach außerhalb eines Sichtfeldes des Augmented-Reality-Head-up-Displays erstrecken, und
- Rendern zumindest desjenigen virtuellen Elements, das die geringste Entfernung zu einem Zentrum des Sichtfeldes aufweist, wobei eine Anpassung der zu rendernden virtuellen Elemente erfolgt, wenn bei einer Änderung der Position des Kraftfahrzeugs ein Lenkwinkel des Kraftfahrzeugs einen Schwellwert überschreitet.

Gemäß einem weiteren Aspekt der Erfindung enthält ein Computerprogramm Instruktionen, die bei Ausführung durch einen Computer den Computer zur Ausführung der folgenden Schritte zum Generieren einer Anzeige eines Augmented-Reality-Head-up-Displays für ein Kraftfahrzeug veranlassen:
- Bestimmen einer Position des Kraftfahrzeugs;
- Bereitstellen einer Vielzahl von virtuellen Elementen für einen Navigationshinweis auf Basis der Position des Kraftfahrzeugs, wobei sich die virtuellen Elemente aus Sicht des Kraftfahrzeugs beidseitig in eine laterale Richtung bis nach außerhalb eines Sichtfeldes des Augmented-Reality-Head-up-Displays erstrecken, und
- Rendern zumindest desjenigen virtuellen Elements, das die geringste Entfernung zu einem Zentrum des Sichtfeldes aufweist, wobei eine Anpassung der zu rendernden virtuellen Elemente erfolgt, wenn bei einer Änderung der Position des Kraftfahrzeugs ein Lenkwinkel des Kraftfahrzeugs einen Schwellwert überschreitet.

Der Begriff Computer ist dabei breit zu verstehen. Insbesondere umfasst er auch Steuergeräte und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Generieren einer Anzeige eines Augmented-Reality-Head-up-Displays für ein Kraftfahrzeug auf:
- ein Positionsbestimmungsmodul zum Bestimmen einer Position des Kraftfahrzeugs; und
- ein Grafikmodul zum Generieren einer Vielzahl von virtuellen Elementen für einen Navigationshinweis auf Basis der Position des Kraftfahrzeugs, wobei sich die virtuellen Elemente aus Sicht des Kraftfahrzeugs beidseitig in eine laterale Richtung bis nach außerhalb eines Sichtfeldes des Augmented-Reality-Head-up-Displays erstrecken, und zum Rendern zumindest desjenigen virtuellen Elements, das die geringste Entfernung zu einem Zentrum des Sichtfeldes aufweist, wobei das Grafikmodul eingerichtet ist, eine Anpassung der zu rendernden virtuellen Elemente vorzunehmen, wenn bei einer vom Positionsbestimmungsmodul festgestellten Änderung der Position des Kraftfahrzeugs ein Lenkwinkel des Kraftfahrzeugs einen Schwellwert überschreitet.

Zur Lösung der beschriebenen Problematik wird eine virtuelle Erweiterung der Darstellungselemente in Querrichtung genutzt. Die zusätzlichen virtuellen Elemente erlauben es, auftretende Positionsungenauigkeiten zu kompensieren. Die zusätzlichen Elemente werden im Normalfall nicht gerendert und somit auch nicht durch das Augmented-Reality-Head-up-Display dargestellt. Im ersten Frame wird aber zumindest das virtuelle Element mit der geringsten Entfernung zum Mittelpunkt der Anzeigefläche gerendert. Auf diese Weise wird erreicht, dass das gerenderte Element möglichst zentral im Sichtfeld und somit gut wahrnehmbar für den Fahrer angeordnet ist. Unabhängig von der Korrektheit der sensorisch erfassten Position des Kraftfahrzeugs wird stets ein korrekt verorteter Navigationshinweis durch das Augmented-Reality-Head-up-Display angezeigt. Durch die virtuelle Erweiterung der Darstellungselemente in Querrichtung wird zudem im Falle einer nicht-orthogonalen Anfahrt auf einen Abbiegepunkt sichergestellt, dass virtuelle Elemente im Sichtfeld liegen und als gerenderte Elemente im Augmented-Reality-Head-up-Display dargestellt werden können. Je höher die Anzahl der virtuellen Elemente ist, bzw. je größer der Bereich ist, in dem zusätzliche virtuelle Elemente verortet werden, desto geringer ist die Wahrscheinlichkeit, dass die Navigationshinweise aufgrund eines vorliegenden Verortungsfehlers nicht dargestellt werden können.

Erfindungsgemäß erfolgt eine Anpassung der zu rendernden virtuellen Elemente, wenn bei einer Änderung der Position des Kraftfahrzeugs ein Lenkwinkel des Kraftfahrzeugs einen Schwellwert überschreitet. Durch diese Maßnahme wird das Problem gelöst, dass die initial festgelegten Elemente durch die Bewegung des Kraftahrzeugs aufgrund des Lenkeingriffes aus dem Sichtfeld wandern. Da derselbe Lenkwinkel in einer weiten Distanz zu den virtuellen Elementen eine größere relative Positionsveränderung bewirkt als in einer nahen Distanz, hängt der Schwellwert für den Lenkwinkel vorzugsweise von einer Entfernung zwischen dem Kraftfahrzeug und einem Anzeigeort für den Navigationshinweis ab. Dadurch kann ein unruhiges Hin- und Herwandern der Elemente vermieden werden.

Gemäß einem Aspekt der Erfindung werden zusätzlich auch virtuelle Elemente gerendert, die benachbart zum virtuellen Element mit der geringsten Entfernung zum Zentrum des Sichtfeldes sind. Das Rendern zusätzlicher Elemente angrenzend an das zentrale Element ermöglicht es, Navigationshinweise aus mehreren Elementen zusammenzusetzen, z.B. aus drei zusammenhängenden Pfeilen. Da es in diesem Zusammenhang vorkommen kann, dass virtuelle Elemente nur teilweise im Sichtfeld liegen, ist es sinnvoll festzulegen, wie mit solchen virtuellen Elementen verfahren werden soll. Bei einer ersten Ausführungsform wird dabei für ein virtuelles Element, das nur teilweise im Sichtfeld des Augmented-Reality-Head-up-Displays liegt, nur der innerhalb des Sichtfeldes liegende Teil des virtuellen Elements gerendert. Bei einer zweiten Ausführungsform werden hingegen nur virtuelle Elemente gerendert, die vollständig im Sichtfeld des Augmented-Reality-Head-up-Displays liegen. Vorzugsweise kann der Nutzer des Augmented-Reality-Head-up-Displays festlegen, auf welche Weise die Darstellung erfolgen soll.

Gemäß einem Aspekt der Erfindung werden die virtuellen Elemente ausgehend vom Zentrum des Sichtfeldes hin zu Rändern des Sichtfeldes mit einer abnehmenden Helligkeit gerendert. Diese Art der Darstellung simuliert ein Ausblenden des Navigationshinweises hin zu den Rändern des Sichtfeldes. Insbesondere bei nur teilweise gerenderten Elementen sorgt dies dafür, dass keine störenden Brüche in der Darstellung an den Rändern des Sichtfeldes auftreten.

Besonders vorteilhaft wird ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt einen kontaktanalogen Navigationshinweis bei einer Annäherung eines Kraftfahrzeugs an eine Abzweigung;
- Fig. 2: zeigt einen kontaktanalogen Navigationshinweis bei einer Annäherung eines Kraftfahrzeugs an eine Abzweigung im Falle eines lateralen Positionierungsfehlers;
- Fig. 3: zeigt einen kontaktanalogen Navigationshinweis bei einer nicht-orthogonalen Annäherung eines Kraftfahrzeugs an eine Abzweigung;
- Fig. 4: zeigt schematisch ein Verfahren zum Generieren einer Anzeige eines Augmented-Reality-Head-up-Displays für ein Kraftfahrzeug;
- Fig. 5: zeigt eine erste Ausführungsform einer Vorrichtung zum Generieren einer Anzeige eines Augmented-Reality-Head-up-Displays für ein Kraftfahrzeug;
- Fig. 6: zeigt eine zweite Ausführungsform einer Vorrichtung zum Generieren einer Anzeige eines Augmented-Reality-Head-up-Displays;
- Fig. 7: stellt schematisch ein Kraftfahrzeug dar, in dem eine erfindungsgemäße Lösung realisiert ist;
- Fig. 8: zeigt schematisch einen allgemeinen Aufbau eines Augmented-Reality-Head-up-Displays für ein Kraftfahrzeug;
- Fig. 9: zeigt einen mit einem erfindungsgemäßen Verfahren generierten kontaktanalogen Navigationshinweis bei einer Annäherung eines Kraftfahrzeugs an eine Abzweigung;
- Fig. 10: zeigt einen mit einem erfindungsgemäßen Verfahren generierten kontaktanalogen Navigationshinweis bei einer Annäherung eines Kraftfahrzeugs an eine Abzweigung im Falle eines lateralen Positionierungsfehlers;
- Fig. 11: zeigt einen mit einem erfindungsgemäßen Verfahren generierten kontaktanalogen Navigationshinweis bei einer nicht-orthogonalen Annäherung eines Kraftfahrzeugs an eine Abzweigung;
- Fig. 12: zeigt einen kontaktanalogen Navigationshinweis, der sich aus mit ortsabhängiger Helligkeit gerenderten Elementen zusammensetzt;
- Fig. 13: zeigt einen kontaktanalogen Navigationshinweis, der abgeschnittene gerenderte Elemente umfasst; und
- Fig. 14: zeigt das Generieren eines kontaktanalogen Navigationshinweises mittels Raycasting.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

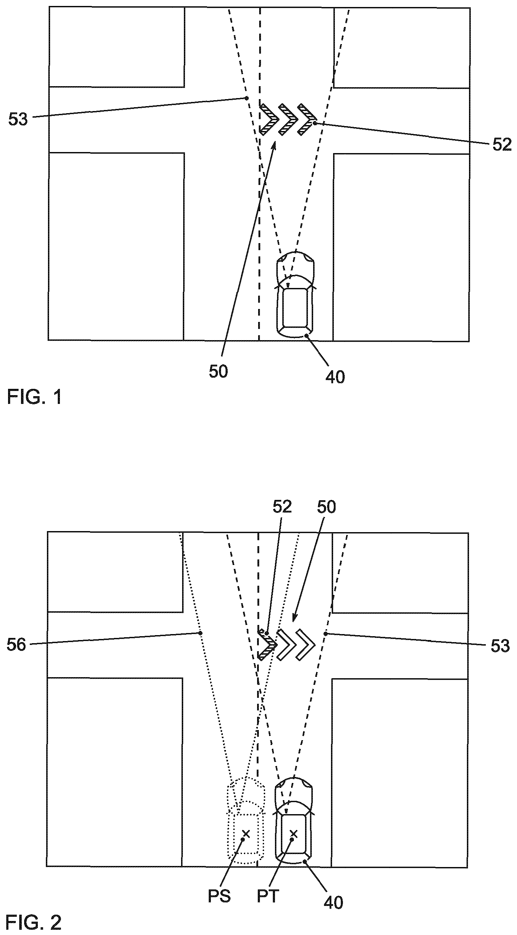

Fig. 1 zeigt einen kontaktanalogen Navigationshinweis 50 bei einer Annäherung eines Kraftfahrzeugs 40 an eine Abzweigung. Zu sehen ist ein beispielhaftes Abbiegeszenario aus der Vogelperspektive. Im in Fig. 1 dargestellten Idealzustand wird durch ein Augmented-Reality-Head-up-Display ein Navigationshinweis 50 angezeigt, der auf der rechten Fahrspur zu liegen scheint und in eine Rechtsabbiegung zeigt. Der Navigationshinweis 50 setzt sich aus drei gerenderten Elementen 52 zusammen, die vollständig im Sichtfeld 53 des Augmented-Reality-Head-up-Displays liegen.

Fig. 2 zeigt einen kontaktanalogen Navigationshinweis 50 bei einer Annäherung eines Kraftfahrzeugs 40 an eine Abzweigung im Falle eines lateralen Positionierungsfehlers, d.h. eines Positionierungsfehlers quer zur Fahrtrichtung. Aufgrund des Positionierungsfehlers weicht die tatsächliche Position PT des Kraftfahrzeugs 40 von der sensorisch bestimmten Position PS des Kraftfahrzeugs 40 ab. Dies führt dazu, dass die auf Basis der sensorisch bestimmten Position PS generierte Augmentierung virtuell außerhalb des vermeintlichen Sichtfeldes 56 verortet wird, das ebenfalls auf der sensorisch bestimmten Position PS basiert, und somit nicht oder nur teilweise dargestellt wird, obwohl sie tatsächlich vollständig innerhalb des tatsächlichen Sichtfeldes 53 liegt. Im dargestellten Beispiel wird lediglich ein einziges gerendertes Element 52 angezeigt.

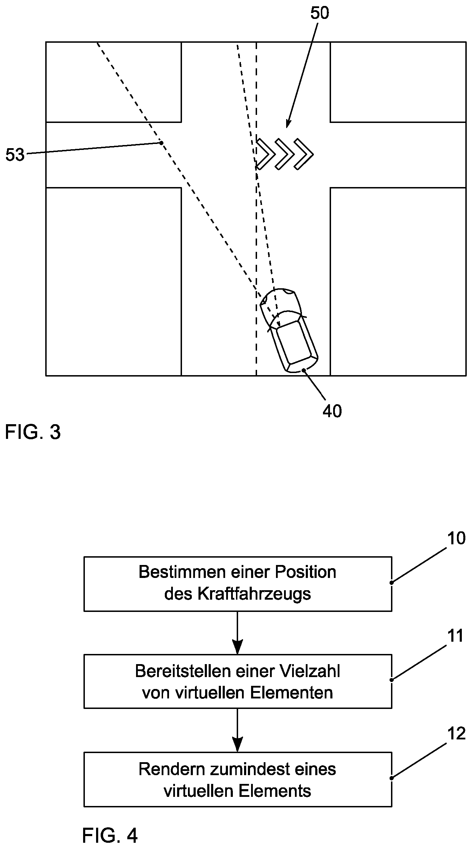

Fig. 3 zeigt einen kontaktanalogen Navigationshinweis 50 bei einer nicht-orthogonalen Annäherung eines Kraftfahrzeugs 40 an eine Abzweigung. Wie in Fig. 3 zu erkennen ist, kann neben Positionierungsfehlern auch eine nicht-orthogonale Anfahrt auf den Abbiegepunkt dazu führen, dass die Augmentierung virtuell außerhalb des Sichtfeldes 53 verortet wird und somit nicht oder nur teilweise dargestellt werden kann. Im dargestellten Beispiel liegt der darzustellende Navigationshinweis 50 vollständig außerhalb des Sichtfeldes 53, sodass kein einziges gerendertes Element angezeigt wird.

Fig. 4 zeigt schematisch ein Verfahren zum Generieren einer Anzeige eines Augmented-Reality-Head-up-Displays für ein Kraftfahrzeug. In einem ersten Schritt wird eine Position des Kraftfahrzeugs bestimmt 10. Auf Basis der Position des Kraftfahrzeugs wird dann eine Vielzahl von virtuellen Elementen für einen Navigationshinweis bereitgestellt 11. Die virtuellen Elemente erstrecken sich dabei aus Sicht des Kraftfahrzeugs beidseitig in eine laterale Richtung bis nach außerhalb eines Sichtfeldes des Augmented-Reality-Head-up-Displays. Schließlich wird zumindest dasjenige virtuelle Element gerendert 12, das die geringste Entfernung zu einem Zentrum des Sichtfeldes aufweist. Zusätzlich können auch virtuelle Elemente gerendert werden 12, die benachbart zu diesem zentralen virtuellen Element sind. Dabei kann vorgesehen sein, dass für ein virtuelles Element, das nur teilweise im Sichtfeld des Augmented-Reality-Head-up-Displays liegt, nur der innerhalb des Sichtfeldes liegende Teil des virtuellen Elements gerendert wird. Alternativ dazu werden nur virtuelle Elemente gerendert, die vollständig im Sichtfeld des Augmented-Reality-Head-up-Displays liegen. In beiden Fällen können die virtuellen Elemente ausgehend vom Zentrum des Sichtfeldes hin zu Rändern des Sichtfeldes mit einer abnehmenden Helligkeit gerendert werden. Dabei erfolgt eine Anpassung der zu rendernden virtuellen Elemente, wenn bei einer Änderung der Position des Kraftfahrzeugs ein Lenkwinkel des Kraftfahrzeugs einen Schwellwert überschreitet. Der Schwellwert für den Lenkwinkel kann dabei von einer Entfernung zwischen dem Kraftfahrzeug und einem Anzeigeort für den Navigationshinweis abhängen.

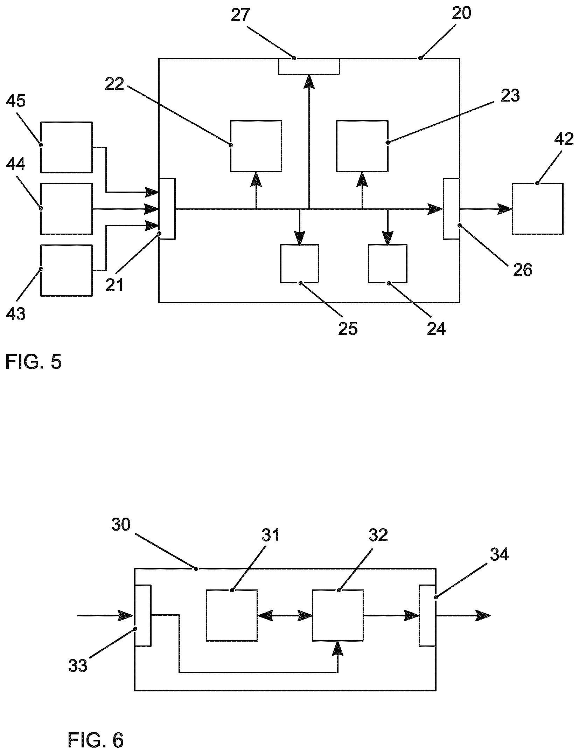

Fig. 5 zeigt eine vereinfachte schematische Darstellung einer ersten Ausführungsform einer Vorrichtung 20 zum Generieren einer Anzeige eines Augmented-Reality-Head-up-Displays für ein Kraftfahrzeug. Die Vorrichtung 20 hat einen Eingang 21, über den beispielsweise Bilddaten einer Kamera 43, Daten eines Sensorsystems 44 oder Daten eines Navigationssystems 45 empfangen werden können. Das Sensorsystem 44 kann beispielsweise einen Laserscanner oder eine Stereokamera zum Detektieren von Objekten in einer Umgebung des Kraftfahrzeugs aufweisen. Die Vorrichtung 20 hat zudem ein Positionsbestimmungsmodul 22, das auf Basis der empfangenen Daten eine Position des Kraftfahrzeugs bestimmt. Auf Basis dieser Position generiert ein Grafikmodul 23 zunächst eine Vielzahl von virtuellen Elementen für einen Navigationshinweis. Die virtuellen Elemente erstrecken sich dabei aus Sicht des Kraftfahrzeugs beidseitig in eine laterale Richtung bis nach außerhalb eines Sichtfeldes des Augmented-Reality-Head-up-Displays. Das Grafikmodul 23 rendert dann zumindest dasjenige virtuelle Element, das die geringste Entfernung zu einem Zentrum des Sichtfeldes aufweist. Zusätzlich kann das Grafikmodul 23 auch virtuelle Elemente rendern, die benachbart zu diesem zentralen virtuellen Element sind. Dabei kann vorgesehen sein, dass für ein virtuelles Element, das nur teilweise im Sichtfeld des Augmented-Reality-Head-up-Displays liegt, nur der innerhalb des Sichtfeldes liegende Teil des virtuellen Elements gerendert wird. Alternativ dazu werden nur virtuelle Elemente gerendert, die vollständig im Sichtfeld des Augmented-Reality-Head-up-Displays liegen. In beiden Fällen können die virtuellen Elemente ausgehend vom Zentrum des Sichtfeldes hin zu Rändern des Sichtfeldes mit einer abnehmenden Helligkeit gerendert werden. Dabei erfolgt eine Anpassung der zu rendernden virtuellen Elemente, wenn bei einer vom Positionsbestimmungsmodul 22 festgestellten Änderung der Position des Kraftfahrzeugs ein Lenkwinkel des Kraftfahrzeugs einen Schwellwert überschreitet. Der Schwellwert für den Lenkwinkel kann dabei von einer Entfernung zwischen dem Kraftfahrzeug und einem Anzeigeort für den Navigationshinweis abhängen.

Das Positionsbestimmungsmodul 22 und das Grafikmodul 23 können von einer Kontrolleinheit 24 gesteuert werden. Über eine Benutzerschnittstelle 27 können gegebenenfalls Einstellungen des Positionsbestimmungsmoduls 22, des Grafikmoduls 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Das Positionsbestimmungsmodul 22, das Grafikmodul 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 26 können als getrennte Schnittstellen oder als eine kombinierte bidirektionale Schnittstelle implementiert sein. Im beschriebenen Beispiel ist die Vorrichtung 20 eine eigenständige Komponente. Sie kann aber ebenso im Steuergerät 42 der Augmented-Reality-Head-up-Display-Vorrichtung integriert sein.

Fig. 6 zeigt eine vereinfachte schematische Darstellung einer zweiten Ausführungsform einer Vorrichtung 30 zum Generieren einer Anzeige eines Augmented-Reality-Head-up-Displays für ein Kraftfahrzeug. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Navigationsdaten oder Daten zu einer Umgebung des Kraftfahrzeugs. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

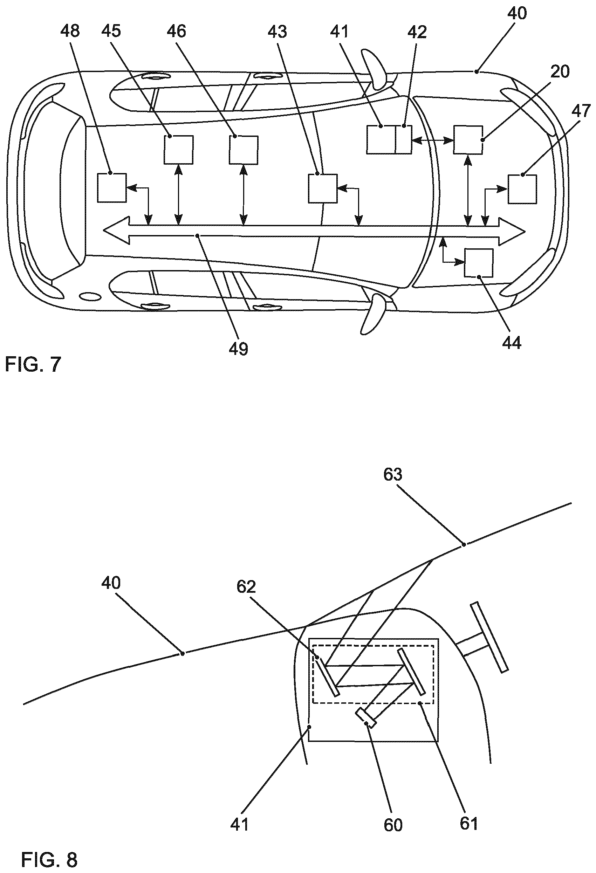

Fig. 7 stellt schematisch ein Kraftfahrzeug 40 dar, in dem eine erfindungsgemäße Lösung realisiert ist. Das Kraftfahrzeug 40 weist ein Augmented-Reality-Head-up-Display 41 mit einem zugehörigen Steuergerät 42 auf. Weiterhin weist das Kraftfahrzeug 40 eine Vorrichtung 20 zum Generieren einer Anzeige des Augmented-Reality-Head-up-Displays 41 auf. Die Vorrichtung 20 kann natürlich auch in das Augmented-Reality-Head-up-Display 41 oder in das Steuergerät 42 des Augmented-Reality-Head-up-Displays 41 integriert sein. Weitere Komponenten des Kraftfahrzeugs 40 sind eine Kamera 43 und ein Sensorsystem 44 zur Erfassung von Objekten, ein Navigationssystem 45, eine Datenübertragungseinheit 46 sowie eine Reihe von Assistenzsystemen 47, von denen eines exemplarisch dargestellt ist. Mittels der Datenübertragungseinheit 46 kann eine Verbindung zu Dienstanbietern aufgebaut werden, beispielsweise zum Abrufen von Kartendaten. Zur Speicherung von Daten ist ein Speicher 48 vorhanden. Der Datenaustausch zwischen den verschiedenen Komponenten des Kraftfahrzeugs 40 erfolgt über ein Netzwerk 49.

Fig. 8 zeigt schematisch ein Augmented-Reality-Head-up-Display 41 für ein Kraftfahrzeug 40, mit dessen Hilfe Inhalte auf einer Projektionsfläche 63 des Kraftfahrzeugs 40 angezeigt werden können, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 60 erzeugt und mit Hilfe eines optischen Moduls 61 auf die Projektionsfläche 63 projiziert. Typischerweise erfolgt die Projektion dabei in einen Bereich der Frontscheibe oberhalb des Lenkrades. Mittels einer optischen Komponente 62 des optischen Moduls 61 kann die Position einer Eyebox des Augmented-Reality-Head-up-Displays 41 angepasst werden. Die bildgebende Einheit 60 kann beispielsweise ein LCD-TFT-Display sein. Das Augmented-Reality-Head-up-Display 41 ist in der Regel in einem Armaturenbrett des Kraftfahrzeugs 40 verbaut.

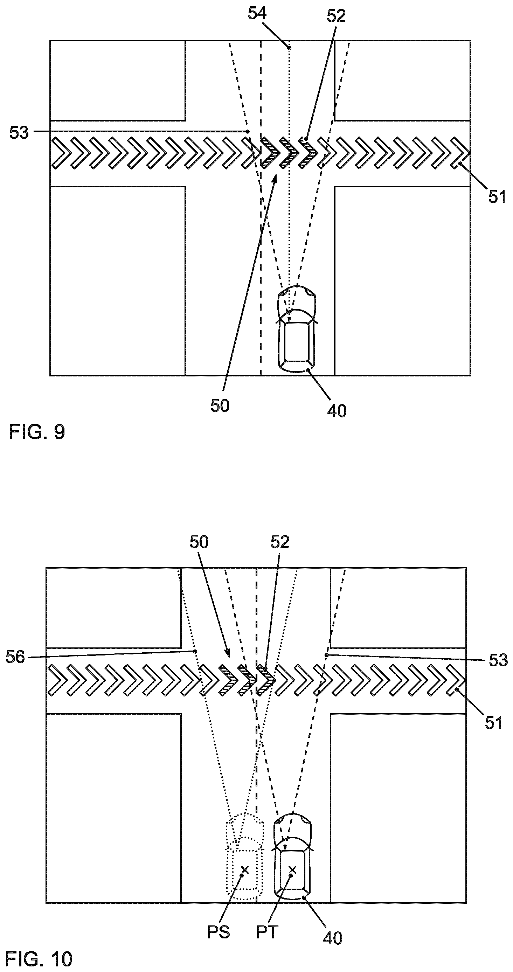

Nachfolgend soll eine bevorzugte Ausführungsform der Erfindung anhand von Fig. 9 bis Fig. 14 beschrieben werden. Dabei wird die erfindungsgemäße Lösung am Beispiel einer Darstellung von Navigationshinweisen erläutert, die aus drei zusammenhängenden Pfeilen bestehen. Selbstverständlich beschränkt sich die erfindungsgemäße Lösung nicht auf diese Ausführungsform.

Fig. 9 zeigt einen mit einem erfindungsgemäßen Verfahren generierten kontaktanalogen Navigationshinweis 50 bei einer Annäherung eines Kraftfahrzeugs an eine Abzweigung. Zur Vermeidung der aufgrund von lateralen Positionsungenauigkeiten auftretenden Darstellungsfehler erfolgt eine virtuelle Erweiterung der Darstellungselemente in Querrichtung. Im konkreten Beispiel werden die drei Pfeile in der virtuellen Szene um weitere virtuelle Elemente 51 ergänzt. Die zusätzlichen virtuellen Elemente 51 werden im Normalfall jedoch nicht gerendert und somit auch nicht durch das Augmented-Reality-Head-up-Display dargestellt. Im ersten darzustellenden Frame wird zumindest das Element mit der geringsten Entfernung zum Mittelpunkt der Anzeigefläche bzw. zum Zentrum 54 des Sichtfeldes 53 gerendert. Optional kann eine definierte Anzahl an weiteren Elementen zu beiden Seiten gerendert werden. In Fig. 9 wird beispielsweise jeweils ein weiteres Element links und rechts des zentralen Elements gerendert, sodass sich der Navigationshinweis 50 aus drei gerenderten Elementen 52 zusammensetzt.

Fig. 10 zeigt einen mit einem erfindungsgemäßen Verfahren generierten kontaktanalogen Navigationshinweis 50 bei einer Annäherung eines Kraftfahrzeugs 40 an eine Abzweigung im Falle eines lateralen Positionierungsfehlers. Durch die virtuelle Erweiterung der Darstellungselemente in Querrichtung wird sichergestellt, dass unabhängig von der Korrektheit der sensorisch erfassten Position PS des Kraftahrzeugs gegenüber der tatsächlichen Position PT des Kraftfahrzeugs 40 stets korrekt verortete Navigationshinweise 50 im Augmented-Reality-Head-up-Display dargestellt werden können. Da sich die virtuellen Elemente 51 auch in das ausgehend von der sensorisch erfassten Position PS bestimmte vermeintliche Sichtfeld 56 erstrecken, kann der Navigationshinweis 50 wie gewünscht aus drei gerenderten Elementen 52 zusammengesetzt werden.

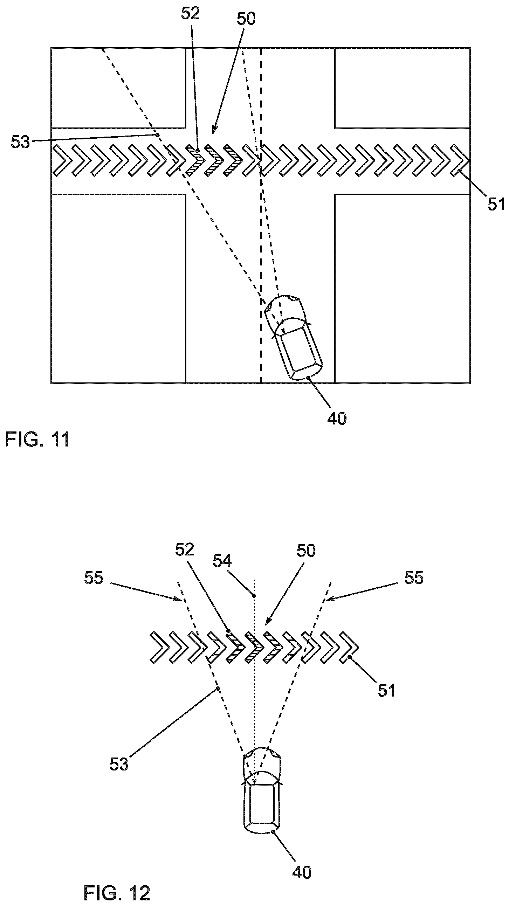

Fig. 11 zeigt einen mit einem erfindungsgemäßen Verfahren generierten kontaktanalogen Navigationshinweis bei einer Annäherung eines Kraftfahrzeugs an eine Abzweigung im Falle einer abweichenden Orientierung des Kraftfahrzeugs. Durch die virtuelle Erweiterung der Darstellungselemente in Querrichtung wird auch in diesem Fall sichergestellt, dass virtuelle Elemente 51 im Sichtfeld 53 liegen und als gerenderte Elemente 52 im Augmented-Reality-Head-up-Display dargestellt werden können.

Je höher die Anzahl der virtuellen Elemente ist, bzw. je größer der Bereich ist, in dem zusätzliche virtuelle Elemente verortet werden, desto geringer ist die Wahrscheinlichkeit, dass die Navigationshinweise aufgrund eines vorliegenden Verortungsfehlers nicht dargestellt werden können.

Der erzielte Effekt der beschriebenen Lösung ist vergleichbar mit dem einer Taschenlampe, deren Lichtkegel die virtuellen Elemente im mittleren Bereich des Sichtfeldes beleuchtet, sodass diese durch eine Reflektion des Lichtes sichtbar werden. Die außerhalb des Lichtkegels liegenden weiteren virtuellen Elemente emittieren hingegen kein Licht und sind daher nicht zu sehen.

Für die Umsetzung des beschriebenen Mechanismus können die virtuellen Elemente in der 3D-Szene als reflektierende, jedoch nicht emittierende Objekte umgesetzt werden. Die virtuelle Repräsentation des Fahrzeugs besitzt in diesem Fall am Punkt des virtuellen Fahrerauges eine gerichtete Lichtquelle, die den mittleren Bereich des Sichtfeldes des Augmented-Reality-Head-up-Displays beleuchtet. Dadurch werden immer nur die mittleren Elemente sichtbar, die das Licht reflektieren, jedoch nicht die außerhalb des Sichtfeldes befindlichen virtuellen Elemente. Bei dieser Ausführungsform kann vorgesehen sein, dass die virtuellen Elemente in Abhängigkeit von ihrer Position unterschiedlich stark ausgeleuchtet werden. Zudem werden bei dieser Variante nicht zwingend vollständige Elemente dargestellt, sondern teilweise auch nur Anteile von Elementen, die im Lichtkegel liegen.

Fig. 12 zeigt beispielhaft einen kontaktanalogen Navigationshinweis 50, der sich aus mit ortsabhängiger Helligkeit gerenderten Elementen 52 zusammensetzt. Die virtuellen Elemente werden dazu ausgehend vom Zentrum 54 des Sichtfeldes 53 hin zu den Rändern 55 des Sichtfeldes 53 mit einer abnehmenden Helligkeit gerendert. Dies ist in Fig. 12 durch die Dichte der Schraffur angedeutet.

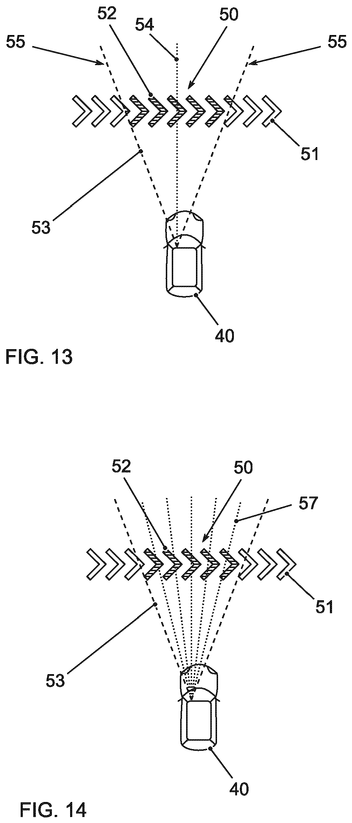

Fig. 13 zeigt einen kontaktanalogen Navigationshinweis 50, der abgeschnittene gerenderte Elemente 52 umfasst. Während die im Zentrum 54 des Sichtfeldes 53 bzw. benachbart zum Zentrum 54 liegenden virtuellen Elemente 51 vollständig vom virtuellen Lichtkegel beleuchtet werden, werden die virtuellen Elemente 51 an den Rändern 55 des Sichtfeldes 53 nur teilweise vom virtuellen Lichtkegel beleuchtet. Dementsprechend werden nur die innerhalb des Sichtfeldes 53 liegenden Teile bzw. die vom virtuellen Lichtkegel beleuchteten Teile dieser virtuellen Elemente 51 gerendert. Dabei kann wiederum eine ortsabhängige Helligkeit berücksichtigt werden.

Bei einer alternativen Ausführungsform werden in festgelegten Abständen virtuelle Raycasts 57 (Sehstrahlen) durch das Sichtfeld 53 des Augmented-Reality-Head-up-Displays geschickt. Das Generieren eines kontaktanalogen Navigationshinweises 50 mittels Raycasting ist in Fig. 14 dargestellt. Wenn diese Raycasts 57auf virtuelle Elemente 51 treffen, so werden an diesen Punkten die entsprechenden Elemente vollständig als gerenderte Elemente 52 dargestellt. Dies ermöglicht eine diskrete Darstellung der Anzeigeelemente. Die Position der Raycasts 57 kann dabei mit der Fahrzeugposition variieren.

Das oben beschriebene Vorgehen bezieht sich auf die Darstellung des ersten Frames bei Anfahrt auf einen Abbiegehinweis. Zwar kann das Vorgehen auch für jeden weiteren Frame verwendet werden, dies führt bei Bewegungen des Kraftfahrzeugs allerdings zu einer statischen Anzeige im Head-up-Display. Augmented Reality erfordert jedoch eine dynamische Anpassung der Anzeige je nach Perspektive. Dies kann durch die nachfolgend beschriebene Vorgehensweise erreicht werden, bei der ein Augmented Reality Effekt erhalten bleibt.

Nach Festlegung der darzustellenden Elemente für den ersten Frame werden in den folgenden Frames dieselben Elemente dargestellt, solange ein vordefinierter Lenkwinkel nicht überschritten wird. Bei Überschreitung des Lenkwinkels erfolgt eine Anpassung der zu rendernden Elemente, da die initial festgelegten Elemente durch die Bewegung des Kraftfahrzeugs aufgrund des Lenkeingriffes voraussichtlich aus dem Sichtfeld wandern. Da derselbe Lenkwinkel in einer weiten Distanz zu den virtuellen Elementen eine größere relative Positionsveränderung bewirkt als in einer nahen Distanz, wird vorzugsweise eine entfernungsabhängige Schwelle für die Lenkwinkelveränderungen, die zur Anpassung der zu rendernden Elemente führen, genutzt. Dadurch kann ein unruhiges Hin- und Herwandern der Elemente vermieden werden.

### Bezugszeichenliste

- 10: Bestimmen einer Position des Kraftfahrzeugs
- 11: Bereitstellen einer Vielzahl von virtuellen Elementen
- 12: Rendern zumindest eines virtuellen Elements
- 20: Vorrichtung
- 21: Eingang
- 22: Positionsbestimmungsmodul
- 23: Grafikmodul
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Kraftfahrzeug
- 41: Augmented-Reality-Head-up-Display
- 42: Steuergerät des Augmented-Reality-Head-up-Displays
- 43: Kamera
- 44: Sensorsystem
- 45: Navigationssystem
- 46: Datenübertragungseinheit
- 47: Assistenzsystem
- 48: Speicher
- 49: Netzwerk
- 50: Navigationshinweis
- 51: Virtuelles Element
- 52: Gerendertes Element
- 53: Tatsächliches Sichtfeld
- 54: Zentrum des Sichtfeldes
- 55: Rand des Sichtfeldes
- 56: Vermeintliches Sichtfeld
- 57: Raycast
- 60: Bildgebende Einheit
- 61: Optisches Modul
- 62: Optische Komponente
- 63: Projektionsfläche
- PS: Sensorische Position
- PT: Tatsächliche Position

## Patentansprüche

1. Verfahren zum Generieren einer Anzeige eines Augmented-Reality-Head-up-Displays (41) für ein Kraftfahrzeug (40), mit den Schritten:
- Bestimmen (10) einer Position (PS) des Kraftfahrzeugs (40);
- Bereitstellen (11) einer Vielzahl von virtuellen Elementen (51) für einen Navigationshinweis (50) auf Basis der Position (PS) des Kraftfahrzeugs (40), wobei sich die virtuellen Elemente (51) aus Sicht des Kraftfahrzeugs (40) beidseitig in eine laterale Richtung bis nach außerhalb eines Sichtfeldes (53) des Augmented-Reality-Head-up-Displays (41) erstrecken, und
- Rendern (12) zumindest desjenigen virtuellen Elements (51), das die geringste Entfernung zu einem Zentrum (54) des Sichtfeldes (53) aufweist;
**dadurch gekennzeichnet, dass** eine Anpassung der zu rendernden virtuellen Elemente (51) erfolgt, wenn bei einer Änderung der Position (PS) des Kraftfahrzeugs (40) ein Lenkwinkel des Kraftfahrzeugs (40) einen Schwellwert überschreitet.

2. Verfahren gemäß Anspruch 1, wobei zusätzlich auch virtuelle Elemente (51) gerendert werden (12), die benachbart zum virtuellen Element (51) mit der geringsten Entfernung zum Zentrum (54) des Sichtfeldes (53) sind.

3. Verfahren gemäß Anspruch 2, wobei für ein virtuelles Element (51), das nur teilweise im Sichtfeld (53) des Augmented-Reality-Head-up-Displays (41) liegt, nur der innerhalb des Sichtfeldes (53) liegende Teil des virtuellen Elements (51) gerendert wird (12).

4. Verfahren gemäß Anspruch 2, wobei nur virtuelle Elemente (51) gerendert werden (12), die vollständig im Sichtfeld (53) des Augmented-Reality-Head-up-Displays (41) liegen.

5. Verfahren gemäß einem der Ansprüche 2 bis 4, wobei die virtuellen Elemente (51) ausgehend vom Zentrum (54) des Sichtfeldes (53) hin zu Rändern (55) des Sichtfeldes (53) mit einer abnehmenden Helligkeit gerendert werden (12).

6. Verfahren gemäß einem der vorherigen Ansprüche, wobei der Schwellwert für den Lenkwinkel von einer Entfernung zwischen dem Kraftfahrzeug (40) und einem Anzeigeort für den Navigationshinweis (50) abhängt.

7. Computerprogramm mit Instruktionen, die bei Ausführung durch einen Computer den Computer zur Ausführung der Schritte eines Verfahrens gemäß einem der Ansprüche 1 bis 6 zum Generieren einer Anzeige eines Augmented-Reality-Head-up-Displays (41) für ein Kraftfahrzeug (40) veranlassen.

8. Vorrichtung (20) zum Generieren einer Anzeige eines Augmented-Reality-Head-up-Displays (41) für ein Kraftfahrzeug (40), mit:
- einem Positionsbestimmungsmodul (22) zum Bestimmen (10) einer Position (PS) des Kraftfahrzeugs (40); und
- einem Grafikmodul (24) zum Generieren (11) einer Vielzahl von virtuellen Elementen (51) für einen Navigationshinweis (50) auf Basis der Position (PS) des Kraftfahrzeugs (40), wobei sich die virtuellen Elemente (51) aus Sicht des Kraftfahrzeugs (40) beidseitig in eine laterale Richtung bis nach außerhalb eines Sichtfeldes (53) des Augmented-Reality-Head-up-Displays (41) erstrecken, und zum Rendern (12) zumindest desjenigen virtuellen Elements (51), das die geringste Entfernung zu einem Zentrum (54) des Sichtfeldes (53) aufweist;
**dadurch gekennzeichnet, dass** das Grafikmodul (24) eingerichtet ist, eine Anpassung der zu rendernden virtuellen Elemente (51) vorzunehmen, wenn bei einer vom Positionsbestimmungsmodul (22) festgestellten Änderung der Position (PS) des Kraftfahrzeugs (40) ein Lenkwinkel des Kraftfahrzeugs (40) einen Schwellwert überschreitet.

9. Kraftfahrzeug (40) mit einem Augmented-Reality-Head-up-Display (41), **dadurch**
**gekennzeichnet, dass** das Kraftfahrzeug (40) eine Vorrichtung (20) gemäß Anspruch 8 aufweist oder eingerichtet ist, ein Verfahren gemäß einem der Ansprüche 1 bis 6 zum Generieren einer Anzeige des Augmented-Reality-Head-up-Displays (41) auszuführen.

## Claims

1. Method for generating a display of an augmented reality head-up display (41) for a motor vehicle (40), comprising the following steps:
- determining (10) a position (PS) of the motor vehicle (40);
- providing (11) a plurality of virtual elements (51) for a navigation instruction (50) on the basis of the position (PS) of the motor vehicle (40), the virtual elements (51) extending, from the perspective of the motor vehicle (40), on both sides in a lateral direction to outside of a field of view (53) of the augmented reality head-up display (41), and
- rendering (12) at least the virtual element (51) that has the shortest distance to a center (54) of the field of view (53);
**characterized in that** the virtual elements (51) to be rendered are adjusted when, upon a change in the position (PS) of the motor vehicle (40), a steering angle of the motor vehicle (40) exceeds a threshold value.

2. Method according to claim 1, wherein, additionally, virtual elements (51) that are adjacent to the virtual element (51) that has the shortest distance to the center (54) of the field of view (53) are also rendered (12).

3. Method according to claim 2, wherein for a virtual element (51) that is only partially located within the field of view (53) of the augmented reality head-up display (41), only the part of the virtual element (51) that is located within the field of view (53) is rendered (12).

4. Method according to claim 2, wherein only virtual elements (51) that are completely located within the field of view (53) of the augmented reality head-up display (41) are rendered (12).

5. Method according to any of claims 2 to 4, wherein the virtual elements (51) are rendered (12) with a decreasing brightness, starting from the center (54) of the field of view (53) toward edges (55) of the field of view (53).

6. Method according to any of the preceding claims, wherein the threshold value for the steering angle depends on a distance between the motor vehicle (40) and a display location for the navigation instruction (50).

7. Computer program comprising instructions which, when executed by a computer, cause the computer to execute the steps of a method according to any of claims 1 to 6 for generating a display of an augmented reality head-up display (41) for a motor vehicle (40).

8. Device (20) for generating a display of an augmented reality head-up display (41) for a motor vehicle (40), comprising:
- a position determination module (22) for determining (10) a position (PS) of the motor vehicle (40); and
- a graphics module (24) for generating (11) a plurality of virtual elements (51) for a navigation instruction (50) on the basis of the position (PS) of the motor vehicle (40), the virtual elements (51) extending, from the perspective of the motor vehicle (40), on both sides in a lateral direction to outside of a field of view (53) of the augmented reality head-up display (41), and for rendering (12) at least the virtual element (51) that has the shortest distance to a center (54) of the field of view (53);
**characterized in that** the graphics module (24) is configured to make an adjustment to the virtual elements (51) to be rendered when, upon a change in the position (PS) of the motor vehicle (40) detected by the position determination module (22), a steering angle of the motor vehicle (40) exceeds a threshold value.

9. Motor vehicle (40) comprising an augmented reality head-up display (41), **characterized in that** the motor vehicle (40) has a device (20) according to claim 8, or is configured to execute a method according to any of claims 1 to 6 for generating a display of the augmented reality head-up display (41).

## Revendications

1. Procédé permettant la génération d'un affichage d'un afficheur tête haute à réalité augmentée (41) pour un véhicule automobile (40), comportant les étapes consistant à :
- déterminer (10) une position (PS) du véhicule automobile (40) ;
- fournir (11) une pluralité d'éléments virtuels (51) pour une indication de navigation (50) sur la base de la position (PS) du véhicule automobile (40), les éléments virtuels (51) s'étendant, du point de vue du véhicule automobile (40), des deux côtés dans une direction latérale jusqu'à l'extérieur d'un champ de vision (53) de l'afficheur tête haute à réalité augmentée (41), et
- rendre (12) au moins l'élément virtuel (51) qui présente la distance la plus faible par rapport à un centre (54) du champ de vision (53) ;
**caractérisé en ce qu'**une adaptation des éléments virtuels (51) à rendre est effectuée lorsqu'un angle de braquage du véhicule automobile (40) dépasse une valeur seuil lors d'une modification de la position (PS) du véhicule automobile (40).

2. Procédé selon la revendication 1, dans lequel sont également rendus (12) des éléments virtuels (51) qui sont adjacents à l'élément virtuel (51) comportant la distance la plus faible par rapport au centre (54) du champ de vision (53).

3. Procédé selon la revendication 2, dans lequel, pour un élément virtuel (51) qui n'est que partiellement situé dans le champ de vision (53) de l'afficheur tête haute à réalité augmentée (41), seule la partie de l'élément virtuel (51) située à l'intérieur du champ de vision (53) est rendue (12).

4. Procédé selon la revendication 2, dans lequel seuls des éléments virtuels (51) situés entièrement dans le champ de vision (53) de l'afficheur tête haute à réalité augmentée (41) sont rendus (12).

5. Procédé selon l'une des revendications 2 à 4, dans lequel les éléments virtuels (51) sont rendus (12) avec une luminosité décroissante à partir du centre (54) du champ de vision (53) vers les bords (55) du champ de vision (53).

6. Procédé selon l'une des revendications précédentes, dans lequel la valeur seuil pour l'angle de braquage dépend d'une distance entre le véhicule automobile (40) et un emplacement d'affichage de l'indication de navigation (50).

7. Programme d'ordinateur comportant des instructions, qui, lors de leur exécution par un ordinateur, amènent l'ordinateur à exécuter les étapes d'un procédé selon l'une des revendications 1 à 6 pour la génération d'un affichage d'un afficheur tête haute à réalité augmentée (41) pour un véhicule automobile (40).

8. Dispositif (20) permettant la génération d'un affichage d'un afficheur tête haute à réalité augmentée (41) pour un véhicule automobile (40), comportant :
- un module de détermination de position (22) permettant la détermination (10) d'une position (PS) du véhicule automobile (40) ; et
- un module graphique (24) permettant la génération (11) d'une pluralité d'éléments virtuels (51) pour une indication de navigation (50) sur la base de la position (PS) du véhicule automobile (40), les éléments virtuels (51) s'étendant, du point de vue du véhicule automobile (40), des deux côtés dans une direction latérale jusqu'à l'extérieur d'un champ de vision (53) de l'afficheur tête haute à réalité augmentée (41), et permettant le rendu (12) d'au moins l'élément virtuel (51) qui présente la distance la plus faible par rapport à un centre (54) du champ de vision (53) ;
**caractérisé en ce que** le module graphique (24) est configuré pour effectuer une adaptation des éléments virtuels (51) à rendre lorsqu'un angle de braquage du véhicule automobile (40) dépasse une valeur seuil lors d'une modification de la position (PS) du véhicule automobile (40) détectée par le module de détermination de position (22).

9. Véhicule automobile (40) comportant un afficheur tête haute à réalité augmentée (41), **caractérisé en ce que** le véhicule automobile (40) présente un dispositif (20) selon la revendication 8 ou est configuré pour exécuter un procédé selon l'une des revendications 1 à 6 pour la génération d'un affichage de l'afficheur tête haute à réalité augmentée (41).
